(19) Europäisches Patentamt
European Patent Office
Office européen des brevets

(11) **EP 3 531 163 B1**

(12) **EUROPÄISCHE PATENTSCHRIFT**

(45) Veröffentlichungstag und Bekanntmachung des Hinweises auf die Patenterteilung:
**01.01.2025 Patentblatt 2025/01**

(21) Anmeldenummer: **19154701.7**

(22) Anmeldetag: **31.01.2019**

(51) Internationale Patentklassifikation (IPC):
**G01S 13/42** $^{(2006.01)}$ **G01S 5/02** $^{(2010.01)}$
**G01S 13/93** $^{(2020.01)}$ **G01S 13/72** $^{(2006.01)}$
**G01S 13/58** $^{(2006.01)}$ **G01S 13/933** $^{(2020.01)}$

(52) Gemeinsame Patentklassifikation (CPC):
**G01S 13/42; G01S 5/0278; G01S 5/0294;**
**G01S 13/588; G01S 13/72; G01S 13/933**

(54) **ECHTZEITVERFAHREN ZUR DYNAMISCHEN KOORDINATEN- UND PARAMETERSCHÄTZUNG MIT GITTERBASIERTEN NICHT-LINEAREN PROBABILISTISCHEN FILTERN**

REAL-TIME METHOD FOR DYNAMIC COORDINATE AND PARAMETER ESTIMATION WITH GRID-BASED NON-LINEAR PROBABILISTIC FILTERING

PROCÉDÉ EN TEMPS RÉEL D'ESTIMATION DYNAMIQUE DES COORDONNÉES ET DES PARAMÈTRES AU MOYEN DES FILTRES PROBABILISTES NON LINÉAIRES À BASE DE GRILLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.02.2018 DE 102018001533**

(43) Veröffentlichungstag der Anmeldung:
**28.08.2019 Patentblatt 2019/35**

(73) Patentinhaber: **MBDA Deutschland GmbH**
**86529 Schrobenhausen (DE)**

(72) Erfinder: **KALENDER, Carolyn**
**85254 Sulzemoos (DE)**

(74) Vertreter: **Isarpatent**
**Patent- und Rechtsanwälte Barth**
**Charles Hassa Peckmann & Partner mbB**
**Friedrichstrasse 31**
**80801 München (DE)**

(56) Entgegenhaltungen:
**EP-A1- 2 385 393     DE-A1- 102016 104 658**

• **BHASHYAM BALAJI ET AL: "Sparse tensors and discrete-time nonlinear filtering", RADAR CONFERENCE, 2008. RADAR '08. IEEE, IEEE, PISCATAWAY, NJ, USA, 26 May 2008 (2008-05-26), pages 1 - 6, XP031376394, ISBN: 978-1-4244-1538-0**

**Beschreibung**

TECHNISCHES GEBIET DER ERFINDUNG

Die Erfindung betrifft Echtzeitverfahren zur dynamischen Koordinaten- und Parameterschätzung, insbesondere bei der Auswertung nicht-linearer stochastischer Modellsysteme unter Verwendung gitterbasierter nicht-linearer probabilistischer Filter. Die Erfindung betrifft zudem die Anwendung solcher Echtzeitverfahren in radargestützter Objektverfolgung und der dynamischen Umgebungserkennung eines unbemannten autonomen Vehikels.

TECHNISCHER HINTERGRUND

Bild- und/oder signalverarbeitende Prozesse nutzen dynamische Koordinatenmessungen, das heißt in zeitlicher Abfolge kontinuierliche, aber zu Einzelzeitpunkten diskrete Messungen von Positionsdaten bewegter oder auch unbewegter Objekte. Dabei werden im Allgemeinen mehrdimensionale Objektkoordinaten durch geeignete Sensorsysteme als Messsignale abgetastet, beispielsweise durch Radarsensoren, Videokameras, Infrarotsensoren oder ähnliche optisch oder elektromagnetische funktionierende Sensormesssysteme. Auf der Basis eines Messsignals zu einem Referenzzeitpunkt kann unter Annahme eines geeigneten nicht-linearen stochastischen dynamischen Modells (NLSD-Modell) die Entwicklung des Positionszustands der beobachteten Objekte vorhergesagt werden. Durch einen Abgleich der vorhergesagten Entwicklung aus dem NLSD-Modell mit der bedingten Wahrscheinlichkeit, dass dieser Positionszustand unter der Bedingung des Messignals zu einem auf den Referenzzeitpunkt folgenden Zeitpunkt realisiert wird, kann ein Korrekturwert abgeschätzt werden, auf dessen Basis die Vorhersage aus dem NLSD-Modell korrigiert werden kann.

Derartige dynamische Koordinatenmessungen werden häufig in Lokalisierungs- und Bahnverfolgungsverfahren wie etwa der automatisierten Objektverfolgung in Radarsystemen, in Navigations- oder Positionsregelanwendungen wie der Robotik oder der Steuerung unbemannter Fahrzeuge oder bei Stabilisierungsaufgaben wie etwa in der automatischen Präzisionsnachführung chirurgischer Instrumente eingesetzt.

Generell unterliegen sowohl die zeitliche Entwicklung der Zustandsgröße als auch die zeitliche Entwicklung der Messgröße nicht-linearen stochastischen Gauss-Markov-Prozessen, das heißt sie lassen sich durch die Lösung einer nicht-linearen Differentialgleichung unter Einfluss von Gauss'schem weißen Rauschen (Wiener-Rauschen) modellieren. Dies ergibt sich aus den Annahmen, dass Störeinflüsse vom zugrundeliegenden dynamischen Modell stochastisch unabhängig auftreten und die Entwicklung der Zustandsgrößen im Wesentlichen nur durch die aktuelle Zustandsgröße bestimmt wird ("Gedächtnislosigkeit" der Zustandsgrößenentwicklung). Zeitlich diskretisierte Messvorgänge liefern Beobachtungen über die aktuellen Zustandsgrößen, allerdings ebenfalls nichtlinear aus der Zustandsinformation heraus transformiert und ebenfalls mit einer stochastisch unabhängigen rauschbehafteten Aberration.

Das sich aus diesem Gleichungssystem ergebende Filterproblem besteht in der Schätzung der Zustandsgrößen unter der Randbedingung vergangener Beobachtungen der Zustandsgrößen. Dieses Problem kann als Bayes'sches Inferenzproblem formuliert werden. Durch eine rekursive Bayes'sche Schätzung wird die bedingte Wahrscheinlichkeitsdichtefunktion ("conditional probability density function", PDF) der Zustandsgrößen a posteriori als Produkt der vorhergesagten PDF (sogenannter "Prior") und der Likelihood-Funktion gebildet. Dabei stellt die Likelihood-Funktion ein Maß dafür dar, wie wahrscheinlich die nachfolgende Beobachtung unter der Annahme der Richtigkeit des Priors eintrifft. Die derart geschätzte a posteriori PDF kann auf eine lediglich von den Beobachtungen der Zustandsgrößen abhängige Normierungskonstante normiert werden.

Die zugehörigen stochastischen partiellen Differentialgleichungen ("stochastic partial differential equation", SPDE), zu denen die PDF eine Lösung darstellt, ergeben sich nach der Theorie der stochastischen Integration als die Kushner-Stratonovich-Gleichung (im Falle der normierten PDF) bzw. die Duncan-Mortensen-Zakai-Gleichung (im Fall der unnormierten PDF). Beide SPDEs umfassen den Fokker-Planck-Kolmogorov-Operator zur Beschreibung advektiver und diffusiver Prozesse der Entwicklung der Zustandsgrößen.

Durch die laufende Prädiktion und Messwertkorrektur der PDF wird die gesamte Systemvergangenheit informationstheoretisch in den dadurch erhaltenen Vorhersagewerten der Zustandsgrößen abgebildet. Fernen können die Dispersion charakterisierende Beiwerte wie beispielsweise Konfidenzintervalle oder Streuparameter aus der Bestimmung der PDF abgeleitet werden.

Ein großes Problem von rasch ablaufenden dynamischen Koordinaten- und Parameterschätzungen betrifft die Echtzeitfähigkeit der eingesetzten Methoden und dabei insbesondere der vorzunehmenden rekursiven Bayes'schen Schätzung. Gitterbasierte numerische Lösungen scheiden als Echtzeitverfahren für mehr als drei- oder vierdimensionale Zustandsgrößenvektoren aufwandsbedingt aus.

In den Druckschriften Kalender, C.; Schöttl, A.: "Nonlinear filtering using sparse grids," Advances in Aerospace Guidance, Navigation and Control, F. Holzapfel und S. Theil, Eds. Springer, 2011, Seiten 359-371, B. Bhashyam und A. Damini "Sparse tensors and discrete-time nonlinear filtering," 2008 IEEE Radar Conference, IEEE, 2008, Seiten 1-6, sowie Kalender, C.; Schöttl, A.: "Sparse grid-based nonlinear filtering," IEEE Transactions on Aerospace and Electronic Systems, Vol. 49 (4), Seiten 2386-2396, Oktober 2013, wird der Einsatz gekachelter dünner Gitter für die Diskretisierung der PDF vorgeschlagen, um eine recheneffiziente nicht-lineare stochastische Filterung bei gleichzeitig akzeptabler Genauigkeit der rekursiven Bayes'schen Schätzung vornehmen zu können.

Es besteht jedoch ein Bedarf an Verbesserungen in der Robustheit gitterbasierter nicht-linearer stochastischer Filter, die die Echtzeitfähigkeit und Genauigkeit nicht beeinträchtigen.

ZUSAMMENFASSUNG DER ERFINDUNG

Die Erfindung ist durch die unabhängigen Ansprüche definiert. Die unabhängigen Ansprüche definieren vorteilhafte Ausführungsformen. Eine der Aufgaben der Erfindung besteht darin, Lösungen für die Implementierung gitterbasierter nicht-linearer stochastischer Filter zu finden, bei denen starke Abweichungen zwischen Prior und Messdichtefunktion im Innovationsberechnungsprozess recheneffizient ausgeglichen werden können. Derartige Lösungen können besonders in Echtzeitanwendungen zur numerischen Analyse stochastischer nicht-linearer Differentialgleichungsmodelle mit hochdimensionalen Zustandsgrößenvektoren eingesetzt werden.

Diese und andere Aufgaben werden durch ein Echtzeitverfahren zur dynamischen Zustandsgrößenbestimmung mit den Merkmalen des Anspruchs 1, durch ein Radargerät mit den Merkmalen des Anspruchs 5 und eine Navigationssteuerung für einen unbemannten Flugkörper mit den Merkmalen des Anspruchs 6 gelöst.

Gemäß einem ersten Aspekt der Erfindung umfasst ein Echtzeitverfahren zur dynamischen Zustandsgrößenbestimmung, insbesondere für den Einsatz in Luftverteidigungs- oder Flugsicherungsradargeräten, zunächst ein Vorhersagen einer a priori Wahrscheinlichkeitsdichtefunktion (PDF) für einen Zustandsgrößenvektor als Funktion einer letzten a posteriori PDF und einer den Zustandsgrößenvektor charakterisierenden nicht-linearen stochastischen Prozessgleichung. Dann wird ein Messwertvektor erzeugt, welcher Beobachtungen über den Zustandsgrößenvektor als Messsignale aufweist, die von einem Sensorsystem abgetastet werden. Der Messwertvektor und die a priori PDF werden in eine Messdichtefunktion überführt und auf einem kartesischen dünnen Gitter, diskretisiert. Iterativ wird die a priori PDF unter Berücksichtigung einer affin linearen Transformation des Gitters der Messdichtefunktion schrittweise nachgeführt. Nach jedem Schritt des iterativen Nachführens, wird eine aktualisierte a posteriori PDF als Produkt der a priori PDF auf dem affin linear transformierten Gitter mit einem Wichtungskoeffizienten, welcher aus dem Verhältnis zwischen der Messdichtefunktion auf dem nicht transformierten Gitter und der nachgeführten Messdichtefunktion gebildet wird, geschätzt. Der Zustandsgrößenvektor weist Raumkoordinaten, Geschwindigkeitsvektoren und ballistische Koeffizienten eines in Echtzeit zu beobachtenden bewegten Objektes auf.

Gemäß einem zweiten Aspekt der Erfindung umfasst ein Radargerät, insbesondere ein Luftverteidigungs- oder Flugsicherungsradargerät, einen oder mehrere Radarsensoren, welche dazu ausgelegt sind, zeitdiskrete Messsignale eines zu verfolgenden Objektes aufzuzeichnen, und eine Steuereinrichtung, welche dazu ausgelegt ist, auf der Basis der aufgezeichneten zeitdiskreten Messsignale gemäß dem Echtzeitverfahren des ersten Aspektes der Erfindung eine dynamische Zustandsgrößenbestimmung der Bahn des Objektes durchzuführen.

Gemäß einem dritten Aspekt der Erfindung umfasst ein unbemannter Flugkörper, insbesondere eine Drohne oder ein autonom operierendes Flugzeug, einen oder mehrere bildgebende Sensoren, welche dazu ausgelegt sind, zeitdiskrete Messsignale einer Umgebung des Flugkörpers aufzuzeichnen, und eine Steuereinrichtung, welche dazu ausgelegt ist, auf der Basis der aufgezeichneten zeitdiskreten Messsignale gemäß dem Echtzeitverfahren des ersten Aspektes der Erfindung eine dynamische Zustandsgrößenbestimmung der Umgebung des Flugkörpers durchzuführen und eine Navigationsstrategie des Flugkörpers zu bestimmen.

Eine wesentliche Idee der Erfindung besteht darin, durch die Einführung eines Gitterflusses degenerative Artefakte beim rekursiven Bayes'schen Schätzer zu verhindern, die insbesondere bei gitterbasierten nicht-linearen stochastischen Filtern auftreten können, wenn die Likelihood-Funktion bzw. die Messdichtefunktion sehr viel besser lokalisiert ist als der Prior (d.h. die Prädiktion der Zustandsgrößen auf der Basis der Systemvergangenheit) oder wenn Messdichtefunktion und Prior deutlich voneinander entfernt liegen. In derartigen Fällen wird der aussagekräftige Bereich der aktuellen Messung nur von Gitterpunkten überdeckt, an denen die Likelihood-Funktion sehr niedrige und damit stark rauschbehaftete Werte aufweist. Die Messwertkorrektur der PDF basiert dann durch die Anwendung der Bayes'schen Formel größtenteils auf Produkten, von denen mindestens einer der Faktoren ein Gewicht nahe Null trägt, so dass sich die Genauigkeit stark verringern würde.

Durch die Zwischenschaltung des die Gitterstruktur erhaltenden Gitterflusses wird der Schritt der Bayes'schen Messwertkorrektur effektiv in zwei Teilschritte bzw. zwei Teilschrittkomplexe aufgeteilt: In einem ersten Schrittkomplex wird das der PDF zugrunde liegende Gitter einer affin linearen Transformation mit geeignet gewählter Transformationsmatrix und Verschiebung unterworfen. Dazu wird die affin lineare Transformation so gewählt, dass sich das Gitter im Wesentlichen in Richtung der a posteriori PDF verschiebt. Um diese Richtung recheneffizient zu ermitteln, kann eine Kalmanfilterung des als gaußverteilt genäherten Priors vorgenommen werden, das heißt, ein linearer Filterprozess, der eine grobe Schätzung ohne großen Aufwand ermöglicht.

In einem zweiten Schrittkomplex wird der durch diesen Gitterfluss vermittelte (und damit diesbezüglich nicht exakte) Prior über eine geeignete logarithmisch differentielle Transformationsvorschrift in eine Likelihood-Funktion überführt, für die der gewählte Gitterfluss exakt gewesen wäre. Numerisch wird eine schrittweise Vermittlung des Gitterflusses durch eine Gitterflussschrittweite $\Delta\lambda$ definiert, so dass eine iterative Auswertung entlang der definierten Gitterflussschrittweite $\Delta\lambda$ Messwertkorrekturschritte ergeben, die statt einer Multiplikation des Priors mit der Likelihood-Funktion eine Multiplikation des Gitterfluss-vermittelten (nicht-exakten) Priors mit einem durch das Verhältnis der tatsächlichen Likelihood-Funktion und der Gitterfluss-vermittelten Likelihood-Funktion gegebenen Wichtungsfaktor verwenden.

Ein besonderer Vorteil in der erfindungsgemäßen Lösung besteht darin, dass bei geeigneter Wahl der affin linearen Transformation des Gitterflusses der Wichtungsfaktor aufgrund der relativen Ähnlichkeit der tatsächlichen Likelihood-Funktion und der Gitterfluss-vermittelten Likelihood-Funktion nahe bei 1 liegt. Dies führt dazu, dass das Produkt der Messwertkorrekturschritte besonders in den Fällen robuster gegenüber Degeneration wird, in denen die tatsächliche Likelihood-Funktion wesentlich geringere Werte als 1 annimmt.

Speziell für dynamische Koordinaten- und Parameterschätzungen, bei denen im Zeitraum zwischen einzelnen Messwertkorrekturen starke Schwankungen der Zustandsgrößen zu erwarten sind, kann ein Gitterfluss die degenerativen Artefakte in den Schätzverfahren minimieren. Gerade bei radarbasierten Objektverfolgungsverfahren unbekannter Flugkörper kann es häufig vorkommen, dass der Flugkörper aktive Täuschungsmanöver durchführt, die den Flugkörper verzögern, beschleunigen oder abrupt die Richtung ändern lassen. In derartigen Fällen würden herkömmliche rekursive Bayes'schen Schätzer weniger robust arbeiten können, da nach einem Täuschungsmanöver die Vorhersage bzw. der Prior stark von den nächsten Messwerten abweicht. Ebenso kann sich ein Problem für immer präziser werdende Messungen, wie etwa bei leistungsfähigen Radarsensoren ergeben: Winkelfehler wirken sich bei nahen Objekten deutlich weniger stark im Ort aus als bei weit entfernten Objekten. Dies führt bei einer Annäherung eines verfolgten Objektes zu einer sich graduell verstärkenden Lokalisation der Messdichtefunktion. Mithilfe der Gitterfluss-vermittelten rekursiven Bayes'schen Schätzverfahren gemäß der Erfindung lässt sich ein Flugkörper radargestützt in seiner Flugbahn in Echtzeit verfolgen, ohne dass Abstriche in der Vorhersagegenauigkeit gemacht werden müssen.

Ähnlich verhält es sich mit Navigationssteuerungen unbemannter Flugkörper, die eine autonome Routenführung durchführen: Änderungen in der bildbasiert ausgewerteten näheren Umgebung können rasch und unvermittelt eintreten, so dass Gitterfluss-vermittelte rekursive Bayes'schen Schätzverfahren gemäß der Erfindung die autonome Navigation des Flugkörpers in Echtzeit entscheidend stabilisieren können.

Vorteilhafte Ausgestaltungen und Weiterbildungen ergeben sich aus den weiteren Unteransprüchen sowie aus der Beschreibung unter Bezugnahme auf die Figuren.

Gemäß einigen Ausführungsformen des erfindungsgemäßen Echtzeitverfahrens kann die der affin linearen Transformation des Gitters zugrunde liegende Transformationsmatrix durch eine Kalmanfilterung der als Gaussverteilung genäherten a priori PDF bestimmt werden. Dabei kann es vorteilhaft sein, wenn der Zustandsgrößenvektor mehr als vier Dimensionen aufweist.

Gemäß einigen weiteren Ausführungsformen des erfindungsgemäßen Echtzeitverfahrens kann der Zustandsgrößenvektor Raumkoordinaten, Geschwindigkeitsvektoren und ballistische Koeffizienten eines in Echtzeit zu beobachtenden bewegten Objektes aufweisen.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmale der Erfindung. Insbesondere wird dabei der Fachmann auch Einzelaspekte als Verbesserungen oder Ergänzungen zu der jeweiligen Grundform der vorliegenden Erfindung hinzufügen.

KURZE INHALTSANGABE DER FIGUREN

Die vorliegende Erfindung wird nachfolgend anhand der in den schematischen Figuren angegebenen Ausführungsbeispiele näher erläutert. Es zeigen dabei:

Fig. 1 ein schematisches Blockschaubild eines Radargerätes gemäß einer Ausführungsform der Erfindung; und

Fig. 2 ein Flussdiagramm eines Echtzeitverfahrens zur Zustandsgrößenbestimmung gemäß einer weiteren Ausführungsform der Erfindung.

Die beiliegenden Figuren sollen ein weiteres Verständnis der Ausführungsformen der Erfindung vermitteln. Sie veranschaulichen Ausführungsformen und dienen im Zusammenhang mit der Beschreibung der Erklärung von Prinzipien und Konzepten der Erfindung. Andere Ausführungsformen und viele der genannten Vorteile ergeben sich im Hinblick auf die Zeichnungen. Die Elemente der Zeichnungen sind nicht notwendigerweise maßstabsgetreu zueinander gezeigt.

Richtungsangebende Terminologie wie etwa "oben", "unten", "links", "rechts", "über", "unter", "horizontal", "vertikal", "vorne", "hinten" und ähnliche Angaben werden lediglich zu erläuternden Zwecken verwendet und dienen nicht der Beschränkung der Allgemeinheit auf spezifische Ausgestaltungen wie in den Figuren gezeigt.

In den Figuren der Zeichnung sind gleiche, funktionsgleiche und gleich wirkende Elemente, Merkmale und Komponenten - sofern nichts anderes ausgeführt ist - jeweils mit denselben Bezugzeichen versehen.

BESCHREIBUNG VON AUSFÜHRUNGSBEISPIELEN

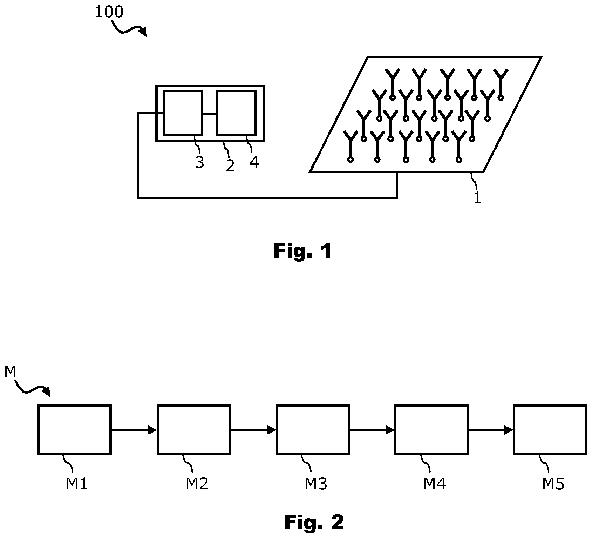

Fig. 1 zeigt ein schematisches Blockschaubild eines Radargerätes 100, welches beispielsweise zur Luftverteidigung oder Flugsicherung eingesetzt werden kann. Es sollte dabei klar sein, dass das Radargerät 100 auch für andere Zwecke eingesetzt werden kann.

Beispielhaft umfasst das Radargerät 100 eine zweidimensionale Gruppenantenne 1 (bzw. Antennenarray 1), welche eine Vielzahl von in einer gleichförmigen Matrix angeordneten Einzelantennen aufweist (ein sogenanntes "uniform rectangular array", URA). Die Einzelantennen können zur Abstrahlung von elektromagnetischen Feldern konfiguriert sein, so dass sich durch konstruktive Interferenz aller abgestrahlten Felder ein gemeinsames Antennendiagramm der Gruppenantenne 1 ergibt. Die Einzelantennen können prinzipiell in jeder geeigneten Bauweise bzw. mit jeder gewünschten Abstrahlcharakteristik implementiert werden, wie etwa Yagi-Uda-Antennen oder Hornstrahler. Prinzipiell eignet sich aber auch jede andere Antennenart für das Radargerät 100.

Das Radargerät 100 wird von einem Radarsteuergerät 2 gesteuert, welches prinzipiell eine Signalverarbeitungseinrichtung 3 aufweist. Das Radarsteuergerät 2 kann weiterhin einen mit der Signalverarbeitungseinrichtung 3 gekoppelten Konfigurationsdatenspeicher 4 aufweisen. Die Signalverarbeitungseinrichtung 3 dient der Ansteuerung der Antenne 1 und kann insbesondere die Gruppenantenne 1 zum Aussenden und Empfangen von Radarsignalen bzw. Radarechosignalen veranlassen. Weitere Komponenten des Radargerätes 100 - wie etwa Filter, Sende-/Empfangsumschalter, Modulatoren, Taktgeber, Phasenschieber, Anzeigeeinrichtungen und ähnliche für Radargeräte übliche Funktionskomponenten - sind aus Gründen der Übersichtlichkeit in Fig. 1 nicht explizit dargestellt. Die in Fig. 1 dargestellten Komponenten des Radargerätes 100 sind nur beispielhafter Natur und weitere Komponenten können im Zusammenhang mit dem Radargerät 100 implementiert werden.

Die Signalverarbeitungseinrichtung 3 kann Radarsignale als Messsignale von der Antenne 1 empfangen. Die Messsignale sind dabei ohne Beschränkung der Allgemeinheit m-dimensionale Messwertvektoren, die zeitdiskret aufgelöst eine Sequenz von Messungen zur Verfolgung der Bahn eines Objektes beschreiben können. Die Signalverarbeitungseinrichtung 3 kann die Messsignale durch gitterbasierte nicht-lineare probabilisitische Filter verarbeiten. Ein mögliches Verfahren, welches in der Signalverarbeitungseinrichtung 3 zur Verarbeitung der Messsignale eingesetzt werden kann, ist beispielhaft in Fig. 2 dargestellt.

Fig. 2 zeigt ein Flussdiagramm eines Echtzeitverfahrens M zur dynamischen Zustandsgrößenbestimmung, welches beispielsweise in dem in Fig. 1 beispielhaft dargestellten Radargerät 100 ausgeführt werden kann, insbesondere in einem Prozessor der Signalverarbeitungseinrichtung 3 des Radarsteuergerätes 2.

Das der Erfindung zugrunde liegende Problem betrifft die nicht-lineare probabilistische Filterung und deren Anwendung in radargestützter Objektverfolgung und bildgebungsbasierter Navigationssteuerung. Die Messsignale, die beispielsweise durch die Signalverarbeitungseinrichtung 3 des Radargerätes 100 verarbeitet werden, sind grundsätzlich fehlerbehaftete Beobachtung einer tatsächlichen Bewegung eines verfolgten Objektes. Die Ermittlung bzw. möglichst genaue Schätzung tatsächlicher Zustandsgrößen in Form eines im Allgemeinen n-dimensionalen Zustandsgrößenvektors auf der Basis aller bis zum aktuellen Zeitpunkt verfügbaren Beobachtungsdaten kann über einen gitterbasierten Bayes'schen Filter erfolgen. Zustandsgrößen können neben Positionskoordinaten auch Geschwindigkeitsvektoren, Beschleunigungswerte, ballistische Koeffizienten oder ähnliche Kenngrößen umfassen.

Der Zustandsgrößenvektor $X_t$ und der Messwertvektor $Y_t$ können in Form von stochastischen Differentialgleichungen beschrieben werden:

$$dX_t = f(t,X_t)dt + \sigma(t,X_t)dW_t$$

$$dY_t = h(t,X_t)dt + v(t,X_t)dV_t .$$

Dabei sind f und h zwei geeignete Funktionen, die das Systemmodell und die Abhängigkeit der Beobachtungen vom Systemmodell abbilden. Die Rauschfunktionen $\sigma$ und $v$ bilden zwei stochastisch unabhängige Wiener-Prozesse $W_t$ und $V_t$ ab.

Gemäß der Arbeiten zur stochastischen Analysis von Itö kann eine exakte Behandlung des Problems durch die Betrachtung der bedingten Dichtewahrscheinlichkeitsfunktion ("conditional probability density function", PDF) $p_t(x)$ erfolgen:

$$p_t(x) := \partial/\partial x \, P( \, X_t \leq x \mid Y_s, \, s \leq t \, ) \, .$$

Dabei ist $P( \, X_t \leq x \mid Y_s, \, s \leq t \, )$ die Wahrscheinlichkeit, dass der unbekannte Zustandsgrößenvektor $X_t$ zum Zeitpunkt einen Wert bis zur Schranke x einnimmt, unter der Randbedingung aller gegebenen Messwertvektoren $Y_s$ bis zum Zeitpunkt t. Die PDF $p_t(x)$ beinhaltet die vollständige Information über sämtliche Zustandsgrößen des beobachteten Systems zur Zeit t. Die optimale Schätzung des Systemzustandes, das heißt diejenige Schätzung, die die Varianz des Schätzfehlers minimiert, lässt sich als bedingte Erwartungsfunktion, also als Integration der Dichtefunktion über alle Schranken x darstellen.

Eine exakte Ermittlung der PDF löst das betrachtete Filterproblem also exakt. Die nicht normierte PDF erfüllt die sogenannte Duncan-Mortensen-Zakai-Gleichung

$$\partial p_t(x) = -\mathcal{L}^* dt + [h(t,x)p_t(x) - \theta(h(t,X_t))p_t(x)] \, d\hat{W}/v(t,X_t) \, .$$

Dabei ist $-\mathcal{L}^*$ der Fokker-Planck-Kolmogorov-Operator (FPK) zur Berücksichtigung advektiver und diffusiver Prozesse. Der FPK ist Ausfluss der Fokker-Planck-Gleichung und beschreibt die Vorhersage des Systemverhaltens ohne Berücksichtigung von Messwerten bzw. Beobachtungen. Derartige Messwerte bzw. Beobachtungen werden über den Innovationsprozess $d\hat{W}$ mit ins Kalkül gezogen, gewichtet mit der Abweichung der Abhängigkeit der Beobachtungen von deren Schätzung.

Die Berechnung der Innovation kann im Falle zeitdiskreter Messupdates über ein rekursives Bayes'sches Inferenzverfahren erfolgen. Dazu ergibt sich die a posteriori PDF $p_t^+(x)$ als Produkt der a priori PDF $p_f^-(x)$ mit der Messdichtefunktion g(t,x). Numerisch betrachtet kann das rekursive Bayes'sche Inferenzverfahren auf verschiedene Arten vereinfacht werden: Neben Partikelfiltern ist ein vielversprechender Ansatz die kartesische Vergitterung des Zustandsraumes nebst der Wahl geeigneter Gitter. Hierzu bieten sich adaptive dünne Gitter an, die die Rechenkomplexität gegenüber vollrangigen Gittern erheblich verringern.

Bei einer Verwendung (adaptiver) dünner Gitter stellt sich das Problem, dass die a priori PDF durch eine diskrete Abtastung an Gitterpunkten gegeben, so dass bei einer direkten Anwendung des Bayes'schen Produktes ein degenerativer Effekt auftreten kann, falls die Messdichtefunktion erheblich besser lokalisiert ist als die a priori PDF oder Messdichtefunktion und a priori PDF auf dem Gitter stark auseinanderfallen. In solchen Fällen wird der essentielle Bereich der Messung nur durch vergleichsweise wenige Gitterpunkte abgedeckt. Alle anderen Gitterpunkte haben in der Messdichtefunktion nur ein relatives Gewicht nahe 0 und tragen faktisch kaum zur Approximation der Messdichtefunktion bei. An diesen Gitterpunkten reduziert sich die Filtergenauigkeit erheblich.

Die grundsätzliche Struktur eines kartesischen Gitters kann allerdings unter affin linearen Transformationen erhalten bleiben. Daher kann ein Gitterfluss definiert werden, welcher das dem rekursiven Bayes'schen Inferenzverfahren zugrunde liegende Gitter transformiert:

$$x(\lambda) = \lambda(Tx+v) + (1-\lambda)x \qquad \text{mit } f(x) = \partial x/\partial \lambda \, .$$

$\lambda$ ist dabei ein Gitterflussparameter, welcher schrittweise zwischen 0 und 1 variiert werden kann und das Gitter strukturerhaltend vom Ort der Lokalisierung der a priori Dichte hin zur eigentlich bestimmten a posteriori PDF überführt. Die Messdichtefunktion, die sich durch den Gitterfluss $x(\lambda)$ ergibt, weicht von der eigentlichen Messdichtefunktion ab. Jedoch kann die Messdichtefunktion $g_{lin}(x)$ in Abhängigkeit der PDF ermittelt werden, für die der Gitterfluss exakt gewesen wäre:

$$\log g_{lin}(x) = -\mathrm{Tr}(\partial f/\partial x) - (\partial \log p(x,\lambda)/\partial x) \cdot (\partial x/\partial \lambda) \, .$$

Die numerische Berechnung kann iterativ in geeigneten Schrittweiten $\Delta\lambda$ erfolgen, so dass in jedem einzelnen der Bayes'schen Aktualisierungsschritte die korrekte a posteriori PDF durch gewichtete Multiplikation der gitterflusskorrigierten a priori PDF mit einem Wichtungskoeffizienten aus dem Verhältnis zwischen tatsächlicher und korrigierter Messdichtefunktion gebildet wird:

$$p(x,\lambda) = p_{lin}(x,\lambda) \cdot (g(x)/g_{lin}(x))^{\Delta\lambda}$$

Ein wesentlicher Vorteil dieser gitterflussvermittelten Bayes'schen Multiplikation ist, dass der Faktor $g(x)/g_{lin}(x)$ bei gut gewählter Gittertransformation sehr nahe an 1 ist. Dadurch wird degenerativen Effekten entgegengewirkt, da das Produkt zur Ermittlung der a posteriori PDF immer relevante Werte aufweist.

Möglichkeiten für die Wahl der affin linearen Transformationsmatrix können durch das zu erreichende Ziel gefunden werden: Kalmanfilter beispielsweise liefern zwar lediglich unter der Annahme eines linearen Filterproblems Ergebnisse mit ausreichender Genauigkeit, können aber für eine grobe Abschätzung der a posteriori PDF herangezogen werden, um einen geeigneten Gitterfluss zu definieren. Dazu wird die a priori PDF durch eine Gaussverteilung geschätzt. Die dieser geschätzten Gaussverteilung zugrunde liegenden Momente wie Erwartungswert und Kovarianz können in ein Kalmanfilter eingegeben werden, um die a posteriori PDF grob zu bestimmen.

Der Gitterfluss kann nun derart gewählt werden, dass die affin lineare Transformationsmatrix T die geschätzten Gaussverteilung P in die grob geschätzte a posteriori PDF $P^+$ überführt:

$$P^+ = T \cdot P^- \cdot T^T$$

Dementsprechend kann die lineare Verschiebung v als Differenz zwischen transformiertem Erwartungswert $x^-$ der geschätzten Gaussverteilung und Erwartungswert $x^+$ der kalmangefilterten a posteriori PDF gewählt werden:

$$v = x^+ - Tx^-$$

In den schematischen Blöcken der Fig. 2 werden die durchzuführenden Iterationsschritte des rekursiven Bayes'schen Inferenzfilters explizit aufgeführt. Zunächst erfolgt in Schritt M1 ein Vorhersagen einer a priori Wahrscheinlichkeitsdichtefunktion (PDF) für einen Zustandsgrößenvektor als Funktion einer letzten a posteriori PDF und einer den Zustandsgrößenvektor charakterisierenden nicht-linearen stochastischen Prozessgleichung. Dann wird in Schritt M2 ein Messwertvektor erzeugt, welcher Beobachtungen über den Zustandsgrößenvektor als Messsignale aufweist, die von einem Sensorsystem abgetastet werden. Der Messwertvektor und die a priori PDF werden in Schritt M3 in eine Messdichtefunktion überführt und auf einem kartesischen dünnen Gitter, diskretisiert. Iterativ wird die a priori PDF unter Berücksichtigung einer affin linearen Transformation des Gitters der Messdichtefunktion in Schritt M4 schrittweise nachgeführt. Nach jedem Schritt des iterativen Nachführens, wird in Schritt M5 schließlich eine aktualisierte a posteriori PDF als Produkt der a priori PDF auf dem affin linear transformierten Gitter mit einem Wichtungskoeffizienten, welcher aus dem Verhältnis zwischen der Messdichtefunktion auf dem nicht transformierten Gitter und der nachgeführten Messdichtefunktion gebildet wird, geschätzt. Der Zustandsgrößenvektor weist Raumkoordinaten, Geschwindigkeitsvektoren und ballistische Koeffizienten eines in Echtzeit zu beobachtenden bewegten Objektes auf.

In der vorangegangenen detaillierten Beschreibung sind verschiedene Merkmale zur Verbesserung der Stringenz der Darstellung in einem oder mehreren Beispielen zusammengefasst worden. Es sollte dabei jedoch klar sein, dass die obige Beschreibung lediglich illustrativer, keinesfalls jedoch beschränkender Natur ist. Sie dient der Abdeckung aller Alternativen und Modifikationen der verschiedenen Merkmale und Ausführungsbeispiele. Viele andere Beispiele werden dem Fachmann aufgrund seiner fachlichen Kenntnisse in Anbetracht der obigen Beschreibung sofort und unmittelbar klar sein.

Die Ausführungsbeispiele wurden ausgewählt und beschrieben, um die der Erfindung zugrundeliegenden Prinzipien und ihre Anwendungsmöglichkeiten in der Praxis bestmöglich darstellen zu können. Dadurch können Fachleute die Erfindung und ihre verschiedenen Ausführungsbeispiele in Bezug auf den beabsichtigten Einsatzzweck optimal modifizieren und nutzen. In den Ansprüchen sowie der Beschreibung werden die Begriffe "beinhaltend" und "aufweisend" als neutralsprachliche Begrifflichkeiten für die entsprechenden Begriffe "umfassend" verwendet. Weiterhin soll eine Verwendung der Begriffe "ein", "einer" und "eine" eine Mehrzahl derartig beschriebener Merkmale und Komponenten nicht grundsätzlich ausschließen.

**Patentansprüche**

1.  Echtzeitverfahren (M) zur dynamischen Zustandsgrößenbestimmung, umfassend:

    Vorhersagen (M1) einer a priori Wahrscheinlichkeitsdichtefunktion, PDF, für einen Zustandsgrößenvektor als Funktion einer letzten a posteriori PDF und einer den Zustandsgrößenvektor charakterisierenden nicht-linearen stochastischen Prozessgleichung;
    Erzeugen (M2) eines Messwertvektors, welcher Beobachtungen über den Zustandsgrößenvektor als Messsignale aufweist, die von einem Sensorsystem abgetastet werden;
    Überführen (M3) des Messwertvektors und der a priori PDF in eine Messdichtefunktion und Diskretisieren der Messdichtefunktion auf einem dünnen kartesischen Gitter;
    Iteratives schrittweises Nachführen (M4) der a priori PDF der Messdichtefunktion unter Berücksichtigung einer affin linearen Transformation des Gitters; und

Schätzen (M5), nach jedem Schritt des iterativen Nachführens (M4), einer aktualisierten a posteriori PDF als Produkt der a priori PDF auf dem affin linear transformierten Gitter mit einem Wichtungskoeffizienten, welcher aus dem Verhältnis zwischen der Messdichtefunktion auf dem nicht transformierten Gitter und der nachgeführten Messdichtefunktion gebildet wird; wobei der Zustandsgrößenvektor Raumkoordinaten, Geschwindigkeitsvektoren und ballistische Koeffizienten eines in Echtzeit zu beobachtenden bewegten Objektes aufweist.

2. Echtzeitverfahren (M) gemäß Anspruch 1, wobei die der affin linearen Transformation des Gitters zugrunde liegende Transformationsmatrix durch eine Kalmanfilterung der als Gaussverteilung genäherten a priori PDF bestimmt wird.

3. Echtzeitverfahren (M) gemäß Anspruch 2, wobei der Zustandsgrößenvektor mehr als vier Dimensionen aufweist.

4. Radargerät (100), insbesondere Luftverteidigungs- oder Flugsicherungsradargerät, mit:

einem oder mehreren Radarsensoren, welche dazu ausgelegt sind, zeitdiskrete Messsignale eines zu verfolgenden Objektes aufzuzeichnen; und
einer Steuereinrichtung, welche dazu ausgelegt ist, auf der Basis der aufgezeichneten zeitdiskreten Messsignale gemäß dem Echtzeitverfahren (M) nach einem der Ansprüche 1 bis 3 eine dynamische Zustandsgrößenbestimmung der Bahn des Objektes durchzuführen.

5. Verwendung des Echtzeitverfahrens (M) gemäß einem der Ansprüche 1 bis 3 zur Objektverfolgung mittels eines Radargerätes.

6. Verwendung des Echtzeitverfahrens (M) gemäß einem der Ansprüche 1 bis 3 zur dynamischen Umgebungserkennung eines unbemannten autonomen Vehikels.

**Claims**

1. Real-time method (M) for dynamic state variable determination, comprising:

predicting (M1) an a priori probability density function, PDF, for a state variable vector as a function of a last a posteriori PDF and a non-linear stochastic process equation that characterises the state variable vector;
generating (M2) a measured value vector that has observations about the state variable vector as measurement signals that are sampled by a sensor system;
converting (M3) the measured value vector and the a priori PDF into a measured density function and discretizing the measured density function on a thin Cartesian grid;
iterative step-by-step tracking (M4) of the a priori PDF of the measurement density function taking into account an affin linear transformation of the grid; and
estimating (M5), after each step of the iterative tracking (M4), an updated a posteriori PDF as a product of the a priori PDF on the affine linearly transformed grid with a weighting coefficient that is formed from the ratio between the measurement density function on the non-transformed grid and the tracked measurement density function; wherein the state variable vector has spatial coordinates, velocity vectors and ballistic coefficients of a moving object to be observed in real time.

2. Real-time method (M) in accordance with claim 1, wherein the transformation matrix on which the affin linear transformation of the grid is based is determined by Kalman filtering the a priori PDF approximated as a Gaussian distribution.

3. Real-time method (M) in accordance with claim 2, wherein the state variable vector comprises more than four dimensions.

4. Radar device (100), in particular air defence or air traffic control radar device, having:

one or more radar sensors that are designed so as to record time-discrete measurement signals of an object to be tracked; and
a control device, which is designed so as to perform a dynamic state variable determination of the path of the object on the basis of the recorded time-discrete measurement signals in accordance with the real-time method (M) according to one of claims 1 to 3.

5. Use of the real-time method (M) in accordance with one of claims 1 to 3 for object tracking by means of a radar device.

6. Use of the real-time method (M) in accordance with one of claims 1 to 3 for dynamic environment detection of an unmanned autonomous vehicle.

**Revendications**

1. Procédé en temps réel (M) de détermination dynamique de variable d'état, comprenant :

la prévision (M1) d'une fonction de densité de probabilité, PDF, a priori pour un vecteur de variable d'état en tant que fonction d'une dernière PDF a posteriori et d'une équation de processus stochastique non linéaire caractérisant le vecteur de variable d'état ;
la génération (M2) d'un vecteur de valeur de mesure, qui présente des observations sur le vecteur de variable d'état sous la forme de signaux de mesure qui sont détectés par un système de détection ;
la conversion (M3) du vecteur de valeur de mesure et de la PDF a priori en une fonction de densité de mesure et la discrétisation de la fonction de densité de mesure sur une grille cartésienne fine ;
l'ajustement progressif itératif (M4) de la PDF a priori de la fonction de densité de mesure en tenant compte d'une transformation linéaire affine de la grille ; et
l'estimation (M5), après chaque étape de l'ajustement itératif (M4), d'une PDF a posteriori actualisée en tant que produit de la PDF a priori sur la grille transformée de manière linéaire affine avec un coefficient de pondération qui est formé à partir du rapport entre la fonction de densité de mesure sur la grille non transformée et la fonction de densité de mesure ajustée ;
dans lequel le vecteur de variable d'état présente des coordonnées spatiales, des vecteurs de vitesse et des coefficients balistiques d'un objet en mouvement à observer en temps réel.

2. Procédé en temps réel (M) selon la revendication 1, dans lequel la matrice de transformation servant de base pour la transformation linéaire affine de la grille est déterminée par un filtrage de Kalman de la PDF a priori approchée en tant que distribution gaussienne.

3. Procédé en temps réel (M) selon la revendication 2, dans lequel le vecteur de variable d'état présente plus de quatre dimensions.

4. Appareil radar (100), en particulier appareil radar de défense aérienne ou de sécurité de la navigation aérienne, comportant :

un ou plusieurs capteurs radar, qui sont conçus pour enregistrer des signaux de mesure discrets dans le temps d'un objet à poursuivre ; et
un dispositif de commande, qui est conçu pour, sur la base des signaux de mesure discrets dans le temps enregistrés, effectuer une détermination dynamique de variable d'état de la trajectoire de l'objet suivant le procédé en temps réel (M) selon l'une des revendications 1 à 3.

5. Utilisation du procédé en temps réel (M) selon l'une des revendications 1 à 3 pour la poursuite d'objets au moyen d'un appareil radar.

6. Utilisation du procédé en temps réel (M) selon l'une des revendications 1 à 3 pour la détection dynamique de l'environnement d'un véhicule autonome sans pilote.

**Fig. 1**

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Nonlinear filtering using sparse grids. **KALENDER, C.** ; **SCHÖTTL, A.** Advances in Aerospace Guidance, Navigation and Control. Springer, 2011, 359-371
- Sparse tensors and discrete-time nonlinear filtering. **B. BHASHYAM** ; **A. DAMINI**. 2008 IEEE Radar Conference. IEEE, 2008, 1-6

- **KALENDER, C.** ; **SCHÖTTL, A.** Sparse grid-based nonlinear filtering. *IEEE Transactions on Aerospace and Electronic Systems*, October 2013, vol. 49 (4), 2386-2396